# EUROPÄISCHE PATENTANMELDUNG

(11) **EP 3 900 524 A1**
(43) Veröffentlichungstag der Anmeldung: **27.10.2021**
(21) Anmeldenummer: 21162569.4
(22) Anmeldetag: 15.03.2021
(51) Int. Cl.: A01G 27/00, A01G 17/04, A01G 17/14, A01G 9/12

(54) **VERFAHREN ZUM AUFFORSTEN EINER WALDFLÄCHE UND PFLANZ- ANORDNUNG**

(30) Priorität: 23.04.2020 DE 102020111070
(71) Anmelder: Szuchalski, Slawomir, 02826 Görlitz (DE); Szuchalski, Andre, 02826 Görlitz (DE)
(72) Erfinder: STRUNZ, Rainer, 94036 Passau (DE)
(74) Vertreter: Wunderlich & Heim Patentanwälte Partnerschaftsgesellschaft mbB

(57) **Zusammenfassung**

Die Erfindung betrifft ein Verfahren zum Aufforsten einer Waldfläche und eine Pflanzanordnung, bei welchen auf einer aufzuforstenden Bodenfläche eine Vielzahl von Baumsetzlingen gepflanzt wird, welche jeweils in ein Pflanzloch eingesetzt werden. Zu den einzelnen Baumsetzlingen wird in den Boden ein Markierungsstab eingebracht, welcher wesentlich höher als der Baumsetzling ist und diesen überragt. An den Markierungsstäben wird ein mit Wasser befülltes Behältnis lösbar befestigt, von welchem sich eine Bewässerungsleitung nach unten in das Pflanzloch des Baumsetzlings erstreckt. Der Baumsetzling wird in einer Anwachsphase von dem Behältnis über die Bewässerungsleitung mit Wasser versorgt. Nach der Anwachsphase kann das Behältnis entfernt werden, während der Markierungsstab weiter an dem Baumsetzling verbleibt.

## Beschreibung

Die Erfindung betrifft ein Verfahren zum Aufforsten einer Waldfläche nach dem Anspruch 1 sowie eine Pflanzordnung, insbesondere zum Aufforsten einer Waldfläche, nach dem Anspruch 5.

Bei der Aufforstung einer Waldfläche ist es häufig erforderlich, mehrere 100 bis mehrere 1.000 Hektar einer Fläche gleichzeitig mit Baumsetzlingen der gleichen Größe zu versehen, so dass sich hieraus durch ein möglichst gleichmäßiges und gleichzeitiges Wachstum der Pflanzen ein gesunder und nutzbringender Wald entstehen kann. Der Baumsetzling, welcher typischerweise eine Größe zwischen 20 cm bis 40 cm aufweist, wird jeweils in ein Pflanzloch im Boden eingesetzt. Anders als bei einer rein landwirtschaftlichen Fläche sind Baumsetzlinge auf Waldflächen kaum maschinell einzupflanzen, so dass dies mit einem erheblichen Aufwand an Zeit und Personal mit entsprechenden Kosten verbunden ist.

Aufgrund sich einstellender klimatischer Veränderungen haben sich bei der Aufforstung von Waldflächen verstärkt Trockenschäden ergeben. Derartige Trockenschäden entstehen insbesondere dann, wenn innerhalb der ersten Tage während der entscheidenden Anwachsphase eines Baumsetzlings ein Trockenschaden an der Pflanze entsteht. Dabei kann die frisch gesetzte Pflanze absterben oder zumindest so geschädigt werden, dass diese zukünftig in ihrem Wuchs so beeinträchtigt ist, dass diese für einen wirtschaftliche ausgerichteten Holzanbau nicht mehr nutzfähig ist.

Ein weiteres Problem bei der Waldaufforstung besteht darin, dass die Gefahr einer Überwucherung der Baumsetzlinge durch benachbarte Sträucher oder Kräuter besteht. Diese Gefahr der Überwucherung hat sich ebenfalls durch die Klimaveränderungen erhöht, da bestimmte Sträucher, wie Haselnuss oder Brombeere, eine erhöhte Trockenresistenz aufweisen und wärmere und trockenere Perioden für ein verstärktes Wachstum nutzen können.

Es ist bekannt, Pflanzen bei Trockenheit künstlich zu bewässern. Aus der Landwirtschaft und aus dem Gartenbau sind dabei Bewässerungsanordnungen bekannt, bei welchen Bewässerungsleitungen am Boden oder im Boden verlegt werden und über Bewässerungsautomaten den Pflanzen bedarfsgerecht Wasser zugeführt wird. Derartig aufwändige Bewässerungsanlagen sind für den Garten- und Obstanbau und gegebenenfalls für Privatgärten und öffentliche Parkanlagen sinnvoll und zweckmäßig, wenn eine langfristige, dauerhafte Bewässerung besonders wertvoller Pflanzen gewünscht ist. Derartige Bewässerungsanlagen gehen beispielsweise aus der WO 2019/049149 A1, der WO 2008/076087 A1 oder der US 4,315,599 A hervor.

Für eine Aufforstung großer Flächen mit hunderttausenden oder Millionen von Baumsetzlingen, wie es bei der Waldaufforstung notwendig ist, sind derartige Anlagen nicht wirtschaftlich.

Aus der US 2004/0025427 A1 oder der CN 109041882 A gehen vereinfachte Bewässerungssystem für einzelne Bäume hervor, bei welchen ein Bewässerungsbehälter unmittelbar an einem Baum befestigt wird. Derartige Bewässerungssysteme können bei Baumsetzlingen grundsätzlich nicht eingesetzt werden, da die Baumsetzlinge nicht die notwendige Tragfähigkeit aufweisen und durch derartige Bewässerungssysteme unmittelbar geschädigt werden würden.

Der Erfindung liegt die **Aufgabe** zugrunde, ein Verfahren zum Aufforsten einer Waldfläche und eine Pflanzanordnung anzugeben, mit welchen eine besonders zuverlässige und wirtschaftliche Aufforstung von Waldflächen erreicht werden kann.

Die Aufgabe wird zum einen durch ein Verfahren mit den Merkmalen des Anspruchs 1 und zum anderen durch eine Pflanzanordnung mit den Merkmalen des Anspruchs 5 gelöst. Bevorzugte Ausführungsformen der Erfindung sind in den jeweils abhängigen Ansprüchen angegeben.

Nach der Erfindung ist ein Verfahren zum Aufforsten einer Waldfläche vorgesehen, bei dem auf einer aufzuforstenden Bodenfläche eine Vielzahl von Baumsetzlingen gepflanzt wird, welche jeweils in einem Pflanzloch eingesetzt werden, zum jedem Baumsetzling in den Boden ein Markierungsstab eingebracht wird, welcher wesentlich höher als der Baumsetzling ist und diesen überragt, an den Markierungsstäben jeweils ein mit Wasser befülltes Behältnis lösbar befestigt wird, von welchem sich eine Bewässerungsleitung nach unten in das Pflanzloch des Baumsetzlings erstreckt, der Baumsetzling in einer Anwachsphase von dem Behältnis über die Bewässerungsleitung mit Wasser versorgt wird und das Behältnis nach der Anwachsphase entfernt wird, während der Markierungsstab weiter an dem Baumsetzling verbleibt.

Eine Grundidee der Erfindung besteht darin, beim Pflanzen eines Baumsetzlings eine umfassende Schutzanordnung vorzusehen. Gemäß einem ersten Aspekt ist ein Markierungsstab vorgesehen, welcher sich nahe an dem Baumsetzling befindet und diesen in seiner Höhe deutlich überragt. Vorzugsweise kann ein solcher Markierungsstab eine Höhe zwischen 0,8 m bis 2 m, vorzugsweise zwischen 1 m und 1,5 m aufweisen.

Gemäß einem weiteren Aspekt der Erfindung ist dieser Markierungsstab so ausgelegt, dass an diesem ein mit Wasser befüllbares Behältnis lösbar befestigt wird, wobei mittels einer Bewässerungsleitung Wasser aus dem Behältnis zur Bewässerung des Baumsetzlings nach unten zugeführt werden kann. Die Erfindung beruht dabei auf der Erkenntnis, dass insbesondere die ersten Wochen für ein zuverlässiges und gesundes Anwachsen des Baumsetzlings von entscheidender Bedeutung sind. Selbst bei einer Trockenperiode kann somit über das Wasserbehältnis eine zuverlässige Wasserversorgung für den Baumsetzling sichergestellt werden. Vorzugsweise können dem Wasser Nähr- und/oder Wirkstoffe beigemengt werden, welche ein Anwachsen der Setzlinge unterstützen. Besonders bevorzugt kann als Nährstoff Kaliumsulfat und/oder Magnesium vorgesehen sein, da diese eine Trockenresistenz der Pflanze fördern.

Vorzugsweise kann das Behältnis als eine einfache Flasche oder insbesondere als ein einfacher Beutel ausgebildet sein, welcher vorzugsweise mit einer Kunststoffleitung versehen ist. Derartige Behältnisse können als ein Massenprodukt mit sehr geringen Kosten hergestellt werden. Das Material kann durchsichtig, bunt gefärbt oder vorzugsweise metallisch beschichtet oder glänzend sein. Dies reduziert eine Erwärmung des Wassers und kann Wild verscheuchen, was Wildverbiss reduziert. Entsprechendes gilt für Markierungsstäbe.

Nach einer Anwachsphase kann das Behältnis wieder von dem Markierungsstab, insbesondere von einer Befestigung an einem oberen Endbereich des Markierungsstabes, entfernt werden. Der Markierungsstab kann dabei weiter an dem Baumsetzling verbleiben und diesen markieren. Dies kann insbesondere bei eventuell erforderlichen Mähmaßnahmen zum Reduzieren eines Bewuchses von unerwünschten Sträuchern und Kräutern Waldarbeitern zuverlässig anzeigen, wo sich ein Baumsetzling befindet. Dies schützt den Setzling vor versehentlicher Beschädigung.

Für diese Schutzmaßnahme ist dabei mit voraussichtlichen Kosten von ca. 50 Cent bis zu 2,00 Euro je Baumsetzling zu rechnen. Ein derartiger Kostenaufwand liegt deutlich unterhalb des eventuell notwendigen Aufwandes für eine Neubepflanzung einer Waldfläche, falls neu gesetzte Baumsetzlinge durch Trockenheit vernichtet oder soweit geschädigt werden, dass eine Neubepflanzung insgesamt erforderlich ist. Für eine Neubepflanzung ist mit Kosten zwischen 3,00 Euro bis 5,00 Euro je Setzling zu rechnen.

Das erfindungsgemäße Verfahren erlaubt so ein wirtschaftliches und zuverlässiges Aufforsten auch großer Waldflächen unabhängig von eventuellen Trockenperioden und Jahreszeiten. Durch die Vermeidung von Neubepflanzungen ist das Verfahren auch besonders umweltschonend, da insbesondere der Waldboden geschont wird. Abhängig vom Material können die Markierungsstäbe im Wald verbleiben und verrotten oder gegebenenfalls nach ca. 3 Jahren nach einem entsprechenden Wuchs der Baumsetzlinge entfernt werden.

Eine bevorzugte Weiterbildung der Erfindung besteht darin, dass der Markierungsstab mit einer Signalfarbe versehen wird. Diese kann insbesondere Rot, Orange oder Gelb sein. Vorzugsweise weist der Markierungsstab eine untere Spitze auf, mit welcher er in den Boden eingebracht werden kann.

Eine besonders bedarfsgerechte Bewässerung innerhalb der ersten Tage, insbesondere innerhalb der ersten 1 bis 3 Tage, kann nach einer Weiterbildung der Erfindung dadurch erzielt werden, dass die Bewässerungsleitung eine Dosiereinrichtung, insbesondere eine verstellbare Klemme, aufweist, mit welcher eine bedarfsgerechte Wasserzufuhr eingestellt wird. Die Klemme kann insbesondere ein keilartiges Element mit einem verstellbaren Klemmbolzen sein, durch welchen eine Kunststoffleitung in ihrem Durchmesser stufenlos eingeengt werden kann. Abhängig von der Art der Pflanze und einer zu erwartenden Trockenheit kann so eine bedarfsgerechte Wasserzufuhr eingestellt werden. Durch die Klemmeinrichtung kann die Wasserzufuhr auch insgesamt abgesperrt werden, so dass diese beispielsweise erst dann geöffnet werden kann, wenn eine Trockensituation eingetreten ist.

Grundsätzlich kann das Wasserbehältnis als ein Einmalbehältnis ausgebildet sein, so dass es nach der Entleerung wieder entfernt wird. Eine bevorzugte Ausführungsvariante besteht darin, dass das Behältnis eine obere Befüllöffnung aufweist, über welche es bei Bedarf an dem Markierungsstabe wieder befüllt wird. Das Wasserbehältnis kann so bereits beim Setzen des Markierungsstabes an diesen angebracht werden. Auch ein späteres Anbringen ist grundsätzlich möglich. Ist der Behälter entleert, kann bei einem weiteren Bedarf an Bewässerung dieser durch die obere Befüllöffnung wieder befüllt werden. An der Befüllöffnung kann ein Deckel zum Verschließen als Verdunstungsschutz vorgesehen sein.

Die Erfindung betrifft weiterhin eine Pflanzanordnung mit mindestens einem Baumsetzling, welcher in ein Pflanzloch im Boden eingesetzt ist, zu dem mindestens einen Baumsetzling ist ein Markierungsstab in den Boden eingebracht, welcher wesentlich höher als der Baumsetzling ist und diesen überragt, an dem Markierungsstab ein mit Wasser befülltes Behältnis lösbar befestigt ist, von welchem sich eine Bewässerungsleitung nach unten in das Pflanzloch des Baumsetzlings erstreckt, das Behältnis zur Versorgung des Baumsetzlings mit Wasser über die Bewässerungsleitung in einer Anwachsphase ausgelegt ist, und nach der Anwachsphase das Behältnis von dem Markierungsstab entfernbar ist, wobei der Markierungsstab an dem Baumsetzling verbleibt.

Diese Pflanzanordnung kann insbesondere durch das zuvor beschriebene Verfahren erstellt werden. Insbesondere ist die Pflanzanordnung für eine Vielzahl von Baumsetzlingen vorgesehen, die zum Aufforsten einer Waldfläche benötigt werden. Dabei stellen sich die zuvor beschriebenen Vorteile ein.

Eine bevorzugte Ausgestaltung der Erfindung ergibt sich dadurch, dass das Behältnis zur Aufnahme eines Wasservolumens von 1 l bis zu 5 l ausgebildet ist und dass der Markierungsstab ausgelegt ist, das mit Wasser befüllte Behältnis zu tragen. Aufgrund der begrenzten Menge an aufzunehmendem Wasser, welche vorzugsweise nicht 2 l übersteigt, kann der Markierungsstab schmal gehalten werden, so dass dieser das Wachstum kaum beeinträchtigt und auch kostengünstig herstellbar ist.

Zum Erzielen einer ausreichenden Stabilität ist es nach einer Weiterbildung der Erfindung vorteilhaft, dass der Markierungsstab aus einem Metall, Kunststoff oder einem Glasfasermaterial gebildet ist. Derartige Markierungsstäbe sind besonders stabil und können auch nach einem mehrjährigen Einsatz wiederverwendet werden. Grundsätzlich kann ein Markierungsstab auch aus einem verrottbaren Material, insbesondere Holz oder Bambus, bestehen, so dass er nicht mehr entfernt werden muss und verrotten kann.

An einem oberen Endbereich des Markierungsstabes ist eine Befestigungseinrichtung zum Halten des Behältnisses für das Wasser vorgesehen. Besonders zweckmäßig ist es dabei, dass der Markierungsstab rohrförmig mit einer Mittenöffnung zumindest an seinem oberen Ende ausgebildet ist. Als Befestigungseinrichtung kann so ein einfacher Haken dienen, welcher in der oberen Öffnung am Markierungsstab gehalten werden kann. Das Wasserbehältnis, insbesondere ein Kunststoffbeutel, kann mit einer entsprechenden Aufhängeeinrichtung an dem Haken aufgehängt und so befestigt werden.

Besonders vorteilhaft ist es nach einer Weiterbildung, dass das Behältnis eine obere Öffnung zum Befüllen aufweist. Die Öffnung kann dabei vorzugsweise konisch oder trichterartig ausgebildet sein, so dass hierdurch ein besonders leichtes Befüllen ermöglicht wird. Vorzugsweise ist zum Schutz vor Verdunstung ein Deckel zum Verschließen der Öffnung vorgesehen.

Eine weitere zweckmäßige Ausgestaltung der Erfindung kann darin gesehen werden, dass der Baumsetzling in seinem Fußbereich zum Boden mit einer Verdunstungsschutzabdeckung aus einem Fasergewirk versehen ist und dass der Markierungsstab die Verdunstungsschutzabdeckung durchdringt und im darunterliegenden Boden verankert ist. Die Verdunstungsschutzeinrichtung kann insbesondere eine Fasermatte, vorzugsweise aus Naturfasern sein, etwa aus Kokosfasern. Hierdurch wird ein zusätzlicher Trockenheitsschutz bewirkt. Die Verdunstungsschutzeinrichtung kann vorzugsweise eine geschlitzte Ringscheibe sein, welche so in einfacher Weise um den Stamm des Baumsetzlings angeordnet werden kann. Durch ein zusätzliches Einbringen des Markierungsstabes wird so die Verdunstungsschutzabdeckung zusätzlich fixiert, so dass sie besonders lagestabil gehalten ist. Zudem kann eine Verdunstungsschutzabdeckung in den ersten Jahren auch der Überwucherung durch Konkurrenzpflanzen im Nahbereich des Baumsetzlings entgegenwirken. Hierdurch wird ein Aufwand zum Mähen weiter vermindert und auch die Gefahr einer Beschädigung des Baumsetzlings bei einem Mähen reduziert.

Weiterhin können an dem Markierungsstab eine Sonnenschutzeinrichtung zum Abschatten der Pflanze, insbesondere eine Sonnenschutzplatte und/oder eine Fegeschutzeinrichtung gegen ein Verfegen des Setzlings durch Wild, insbesondere eine Fegeschutzspirale, vorgesehen sein.

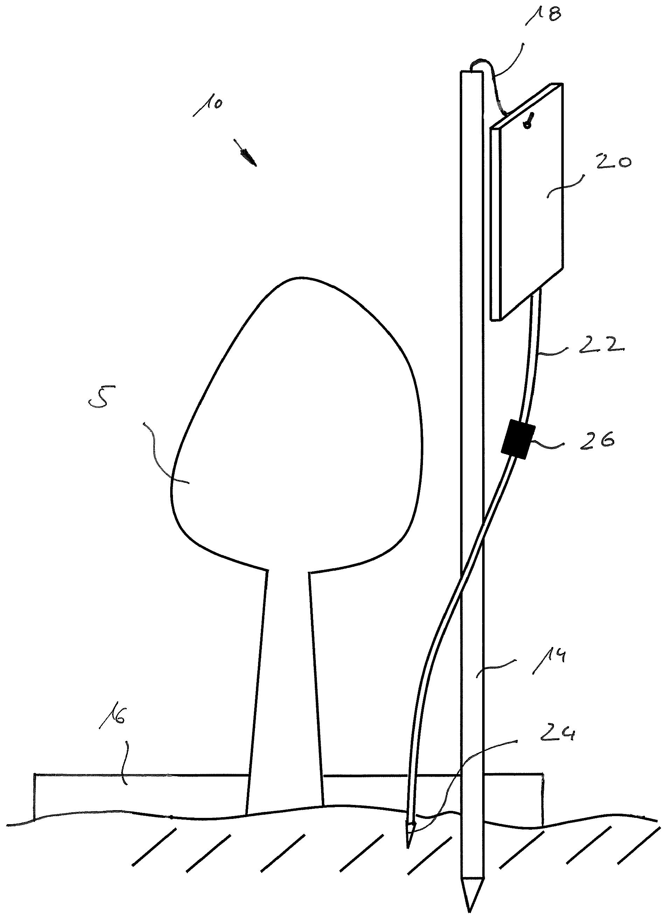

Die Erfindung wird nachfolgend anhand einer bevorzugten Ausführungsform dargestellt, die schematisch in der einzigen Zeichnungsfigur dargestellt ist.

Bei der erfindungsgemäßen Pflanzanordnung 10 ist ein Baumsetzling 5 auf einer Waldfläche gepflanzt. Grundsätzlich ist die Pflanzanordnung für eine Vielzahl von Baumsetzlingen 5 vorgesehen, wobei mehrere Hundert oder mehrere Tausend Baumsetzlinge 5 mit einem vorgegebenen Abstand zueinander gepflanzt sind.

Für einen umfassenden Schutz des einzelnen Baumsetzlings 5 ist nahe zu diesem ein Markierungsstab 14 eingebracht, welcher den Baumsetzling 5 in seiner Höhe etwa um das 2- bis 3-Fache überragen kann. An einem oberen Ende des Markierungsstabes 14 ist über ein Hakenelement 18 lose ein Behältnis 20 für Wasser angebracht.

In dem dargestellten Ausführungsbeispiel ist das Behältnis 20 als ein Kunststoffbeutel erstellt, welcher mit einer Menge von ca. 2 Liter Wasser befüllt werden kann. Über eine Bewässerungsleitung 22 an der Unterseite des Behältnisses 20 kann Wasser in den Boden zu dem Baumsetzling 5 zugeleitet werden. Hierfür ist die Bewässerungsleitung 22 mit einer Bewässerungsspitze 24 in den Boden eingebracht. Über eine Dosiereinrichtung 26, welche ein verschiebbares Klemmelement aufweisen kann, kann eine gleichmäßige, bedarfsgerechte Wasserzufuhr eingestellt werden. Die Wasserzufuhr kann auf eine Tropfenzufuhr eingestellt werden, so dass mit dem Wasservorrat eine Wasserversorgung von 1 bis 3 Tagen sichergestellt werden kann.

Das beutelförmige Behältnis 20 kann an seiner Oberseite metallisch beschichtet oder glänzend sein, so dass es zusätzlich zu einem Verscheuchen von Wild dienen kann. Insbesondere bei einer Entleerung des beutelförmigen Behältnisses 20 kann dieses für eine bestimmte Zeit auch an dem Markierungsstab 14 verbleiben, so dass es als ein fahnenartiges Vertreibungsmittel dienen kann. So kann ein Wildverbiss reduziert werden.

Für einen zusätzlichen Verdunstungsschutz kann am Fuß des Baumsetzlings 5 auf der Bodenfläche eine Verdunstungsschutzabdeckung 16 angeordnet sein. Die Verdunstungsschutzabdeckung 16 kann insbesondere eine Scheibe aus einem Fasermaterial sein, welche um den Baumsetzling 5 gesteckt ist. Die Verdunstungsschutzabdeckung 16 kann dabei nicht nur zur Reduktion der Verdunstung beitragen, sondern auch einen unerwünschten Bewuchs von Kräutern und Sträuchern im Nahbereich des Baumsetzlings 5 für eine gewisse Zeit unterbinden.

Vorzugsweise durchdringen der Markierungsstab 14 und die Bewässerungsleitung 22 die Verdunstungsschutzabdeckung 16, so dass diese hierdurch zusätzlich fixiert ist. Auch die Verdunstungsschutzabdeckung 16 kann bei einer entsprechenden Materialwahl als ein zusätzliches Vertreibungsmittel gegen Wild dienen.

## Patentansprüche

1. Verfahren zum Aufforsten einer Waldfläche, bei dem
- auf einer aufzuforstenden Bodenfläche eine Vielzahl von Baumsetzlingen (5) gepflanzt wird, welche jeweils in ein Pflanzloch eingesetzt werden,
- zu jedem Baumsetzling (5) in den Boden ein Markierungsstab (14) eingebracht wird, welcher wesentlich höher als der Baumsetzling (5) ist und diesen überragt,
- an den Markierungsstäben (14) jeweils ein mit Wasser befülltes Behältnis (20) lösbar befestigt wird, von welchem sich eine Bewässerungsleitung (22) nach unten in das Pflanzloch des Baumsetzlings (5) erstreckt,
- der Baumsetzling (5) in einer Anwachsphase von dem Behältnis (20) über die Bewässerungsleitung (22) mit Wasser versorgt wird und
- das Behältnis (20) nach der Anwachsphase entfernt wird, während der Markierungsstab (14) weiter an dem Baumsetzling (5) verbleibt.

2. Verfahren nach Anspruch 1,
**dadurch gekennzeichnet,**
**dass** der Markierungsstab (5) mit einer Signalfarbe versehen wird.

3. Verfahren nach Anspruch 1 oder 2,
**dadurch gekennzeichnet,**
**dass** die Bewässerungsleitung (22) eine Dosiereinrichtung (26), insbesondere eine verstellbare Klemme, aufweist, mit welcher eine bedarfsgerechte Wasserzufuhr eingestellt wird.

4. Verfahren nach einem der Ansprüche 1 bis 3,
**dadurch gekennzeichnet,**
**dass** das Behältnis (20) eine obere Befüllöffnung aufweist, über welche das Behältnis (20) bei Bedarf an dem Markierungsstab (14) wieder befüllt wird.

5. Pflanzanordnung, insbesondere zum Aufforsten einer Waldfläche nach einem Verfahren nach einem der Ansprüche 1 bis 4, mit
- mindestens einem Baumsetzling (5), welcher in ein Pflanzloch im Boden eingesetzt ist,
- zu jedem Baumsetzling (5) in dem Boden ein Markierungsstab (14) eingebracht ist, welcher wesentlich höher als der Baumsetzling (5) ist und diesen überragt,
- an dem Markierungsstab (14) ein mit Wasser befülltes Behältnis (20) lösbar befestigt ist, von welchem sich eine Bewässerungsleitung (22) nach unten in das Pflanzloch des Baumsetzlings (5) erstreckt,
- das Behältnis (20) zur Versorgung des Baumsetzlings (5) mit Wasser über die Bewässerungsleitung (22) in einer Anwachsphase ausgelegt ist und
- nach der Anfangsphase das Behältnis (20) von dem Markierungsstab (14) entfernbar ist, wobei der Markierungsstab (14) an dem Baumsetzling (5) verbleibt.

6. Pflanzanordnung nach Anspruch 5,
**dadurch gekennzeichnet,**
**dass** das Behältnis (20) zur Aufnahme eines Wasservolumens von 1 l bis zu 5 l ausgebildet ist und dass der Markierungsstab (14) ausgelegt ist, das mit Wasser befüllte Behältnis (20) zu tragen.

7. Pflanzanordnung nach Anspruch 5 oder 6,
**dadurch gekennzeichnet,**
**dass** der Markierungsstab (14) aus einem Metall, Kunststoff oder einem Glasfasermaterial gebildet ist.

8. Pflanzanordnung nach einem der Ansprüche 5 bis 7,
**dadurch gekennzeichnet,**
**dass** der Markierungsstab (14) rohrförmig mit einer Mittenöffnung zumindest an seinem oberen Ende ausgebildet ist.

9. Pflanzanordnung nach einem der Ansprüche 5 bis 8,
**dadurch gekennzeichnet,**
**dass** das Behältnis (20) eine obere Öffnung zum Befüllen aufweist.

10. Pflanzanordnung nach einem der Ansprüche 5 bis 9,
**dadurch gekennzeichnet,**
**dass** der Baumsetzling (5) in seinem Fußbereich zum Boden mit einer Verdunstungsschutzabdeckung (16) vorzugsweise aus einem Fasergewirk versehen ist und
**dass** der Markierungsstab (14) die Verdunstungsschutzabdeckung (16) durchdringt und im darunter liegenden Boden verankert ist.
